# EUROPEAN PATENT APPLICATION

(11) **EP 4 760 236 A1**
(43) Date of publication of application: **17.06.2026**
(21) Application number: 24871961.9
(22) Date of filing: 17.09.2024
(51) Int. Cl.: G01N 21/05, G01N 21/65

(54) **PROBE UNIT FOR SPECTROSCOPIC ANALYSIS**

(30) Priority: 29.09.2023 JP 2023169564
(71) Applicant: FUJIFILM Corporation, Tokyo 106-8620 (JP)
(72) Inventor: NISHI, Takayuki, Ashigarakami-gun, Kanagawa 258-8577 (JP); HASEGAWA, Masataka, Ashigarakami-gun, Kanagawa 258-8577 (JP); YAMAMOTO, Takashi, Ashigarakami-gun, Kanagawa 258-8577 (JP)
(74) Representative: Hoffmann Eitle
(86) International application number: PCT/JP2024/033102
(87) International publication number: WO 2025/070167

(57) **Abstract**

A probe unit for spectroscopic analysis includes: a probe in which a first optical system for irradiating a measurement target substance of physical property data of a spectroscopic analysis apparatus with measurement light and for capturing returning light from the measurement target substance is built, and which is attachable to and detachable from a measurement head of the spectroscopic analysis apparatus in which a second optical system is built; and a displacement restriction member that restricts a displacement of the probe with respect to a container in a state where the probe is disposed in the container for a fluid including the measurement target substance and an orientation of the probe is aligned with an orientation corresponding to a flow of the fluid.

## Description

### BACKGROUND OF THE INVENTION

### 1. Field of the Invention

The disclosed technology relates to a probe unit for spectroscopic analysis.

### 2. Description of the Related Art

The spectroscopic analysis apparatus includes a measurement head. An optical system for irradiating a measurement target substance with measurement light and for capturing returning light from the measurement target substance is built in a distal end portion of the measurement head. JP2023-510210A discloses a configuration in which a distal end portion (referred to as a sample optical system in JP2023-510210A) is attachable to and detachable from a measurement head (referred to as a probe head in JP2023-510210A). In JP2023-510210A, the distal end portion is fixed to the measurement head by a screw, and the measurement head is attached to the distal end portion.

### SUMMARY OF THE INVENTION

The distal end portion of the measurement head is disposed in, for example, a container for a fluid including the measurement target substance. In this case, depending on the measurement head, it may be necessary to align the orientation of the distal end portion with the orientation corresponding to the flow of the fluid and to maintain the state in order to accurately measure the physical property data. For example, in a case in which the container is a flow cell having a flow passage of the fluid and the distal end portion also has a flow passage of the fluid, it is necessary to maintain a state where the orientation of the distal end portion is aligned with an orientation in which a flow direction of the fluid in the flow passage of the distal end portion matches a flow direction of the fluid in the flow passage of the flow cell. However, JP2023-510210A does not disclose a configuration for maintaining a state where the orientation of the distal end portion is aligned with the orientation corresponding to the flow of the fluid.

One embodiment according to the disclosed technology provides a probe unit for spectroscopic analysis capable of contributing to accurate measurement of physical property data.

A probe unit for spectroscopic analysis according to the present disclosure includes: a probe in which a first optical system for irradiating a measurement target substance of physical property data of a spectroscopic analysis apparatus with measurement light and for capturing returning light from the measurement target substance is built, and which is attachable to and detachable from a measurement head of the spectroscopic analysis apparatus in which a second optical system is built; and a displacement restriction member that restricts a displacement of the probe with respect to a container for a fluid including the measurement target substance in a state where the probe is disposed in the container and an orientation of the probe is aligned with an orientation corresponding to a flow of the fluid.

It is preferable that the container is a flow cell having a first flow passage through which the fluid flows.

It is preferable that the probe has a second flow passage through which the fluid flows.

It is preferable that the orientation of the probe is aligned with an orientation in which a flow direction of the fluid in the second flow passage matches a flow direction of the fluid in the first flow passage.

It is preferable that the second flow passage has an inlet of the fluid and an outlet of the fluid surrounded by a wall surface.

It is preferable that the probe unit includes a connecting member that attachably and detachably connects the measurement head and the probe.

It is preferable that the probe is fitted to the connecting member to perform axial alignment between a first optical axis of the first optical system and a second optical axis of the second optical system.

It is preferable that the connecting member is attachable to and detachable from the measurement head.

It is preferable that the probe is an inner cylinder, the displacement restriction member is an outer cylinder, and the connecting member is inserted into a space between the probe and the displacement restriction member.

It is preferable that a through-hole is formed in the displacement restriction member, a screw hole that faces an outer peripheral surface of the probe is formed at a position of the connecting member corresponding to the through-hole, and a tip of a bolt that is inserted into the through-hole and that is threaded into the screw hole is pressed against the outer peripheral surface of the probe to fix the probe and the connecting member.

It is preferable that the displacement restriction member restricts a rotation of the probe around a first optical axis of the first optical system.

It is preferable that the probe is an inner cylinder, the displacement restriction member is an outer cylinder, a flange portion that comes into contact with a bottom surface of an attachment hole formed in the container is formed on an outer peripheral surface of the probe, and the rotation of the probe is restricted by pressing an end portion of the displacement restriction member against the flange portion.

It is preferable that the probe has a facing wall surface facing an emission surface of the measurement light of the first optical system, and a metal is disposed on at least a part of a surface of the facing wall surface.

It is preferable that an area of the metal on the facing wall surface is larger than an irradiation area of the measurement light on the facing wall surface.

It is preferable that the physical property data is Raman spectral data.

It is preferable that the fluid is any of a cell culture solution, a culture supernatant, a purified solution, or a culture medium.

It is preferable that the first optical system includes a lens having a positive refractive power.

It is preferable that the first optical system is composed of only the lens.

It is preferable that the lens has an emission surface of the measurement light that comes into contact with the fluid, and an emission surface is planar.

It is preferable that the first optical system includes an optical element having an emission surface of the measurement light that comes into contact with the fluid, in addition to the lens, and an emission surface is planar.

It is preferable that the lens is any of a hemispherical lens, a ball lens, a cylindrical lens, or an aspherical lens.

According to the disclosed technology, it is possible to provide a probe unit for spectroscopic analysis capable of contributing to accurate measurement of physical property data.

### BRIEF DESCRIPTION OF THE DRAWINGS

FIG. 1 is a diagram showing a state where Raman spectral data of an antibody or the like in a culture supernatant obtained in a cell culture unit is measured by a measurement system.
FIG. 2 is a diagram showing excitation light and Raman scattered light.
FIG. 3 is an exploded perspective view of a flow cell, a probe unit for spectroscopic analysis, and a measurement head.
FIG. 4 is an exploded cross-sectional view of the flow cell, the probe unit for spectroscopic analysis, and the measurement head.
FIG. 5 is a cross-sectional view of the flow cell, the probe unit for spectroscopic analysis, and the measurement head.
FIG. 6 is a diagram showing an optical system built in the measurement head.
FIG. 7 is a diagram showing a relationship between an area of a metal on a facing wall surface and an irradiation area of the excitation light on the facing wall surface.
FIG. 8 is a flowchart showing an assembly procedure of the probe unit for spectroscopic analysis.
FIG. 9 is a diagram showing a state where the probe is rotated around an optical axis and the orientation of the probe is aligned with an orientation in which a flow direction of the culture supernatant in a flow passage of the probe matches a flow direction of the culture supernatant in a flow passage of the flow cell.
FIG. 10 is a diagram showing a state where a rotation restriction member is attached to an attachment hole of the flow cell, and a distal end portion of the rotation restriction member is pressed against a flange portion of the probe to restrict the rotation of the probe.
FIG. 11 is a diagram showing a state where a connecting member is inserted into a space between the probe and the rotation restriction member, and axial alignment between an optical axis of an optical system built in the probe and an optical axis of an optical system built in the measurement head is performed.
FIG. 12 is a diagram showing a state where a screw is inserted into a through-hole of the rotation restriction member, the screw is threaded into a screw hole of the connecting member, and a tip of a bolt is pressed against a bottom surface of a groove portion of the probe to fix the probe and the connecting member.
FIG. 13 is a diagram showing a modification example in which the probe unit for spectroscopic analysis is disposed in a storage tank of the culture supernatant.
FIG. 14 is a diagram showing an optical system including a ball lens.
FIG. 15 is a diagram showing another example of the optical system including the ball lens.
FIG. 16 is a diagram showing an optical system including a cylindrical lens.
FIG. 17 is a diagram showing an optical system including a plano-convex lens having an aspherical incidence surface.
FIG. 18 is a diagram showing an optical system composed of only a hemispherical lens.

### DESCRIPTION OF THE PREFERRED EMBODIMENTS

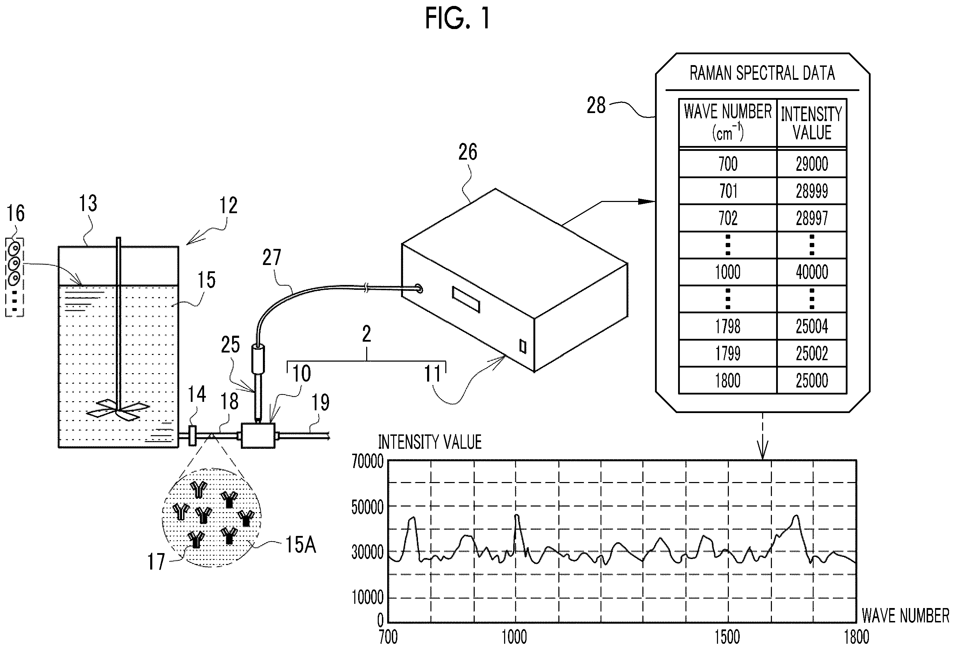

As shown in FIG. 1 as an example, a measurement system 2 comprises a flow cell 10 and a Raman spectrometer 11. The measurement system 2 is incorporated in, for example, a cell culture unit 12 of a system for manufacturing a drug substance of a biopharmaceutical. The cell culture unit 12 includes a culture tank 13 and a cell removal filter 14. A cell culture solution 15 is stored in the culture tank 13. The flow cell 10 is an example of a "container" according to the present disclosed technology. In addition, the Raman spectrometer 11 is an example of a "spectroscopic analysis apparatus" according to the present disclosed technology.

An antibody-producing cell 16 is seeded in the culture tank 13, and the antibody-producing cell 16 is cultured in the cell culture solution 15. The antibody-producing cell 16 is, for example, a cell established by incorporating an antibody gene into a host cell such as Chinese hamster ovary cells (CHO cells). The antibody-producing cell 16 produces immunoglobulin, that is, an antibody 17 in a process of culture. For this reason, the antibody 17 is present in the cell culture solution 15 in addition to the antibody-producing cell 16. The antibody 17 is, for example, a monoclonal antibody, which serves as an active ingredient of the biopharmaceutical. The antibody 17 is an example of a "measurement target substance" according to the disclosed technology.

A first sending passage 18 is connected to the culture vessel 13. The cell removal filter 14 is disposed in the first sending-out channel 18. The cell removal filter 14 captures the antibody-producing cell 16 contained in the cell culture solution 15 with a filter membrane (not shown) by using, for example, a tangential flow filtration (TFF) method, and removes the antibody-producing cell 16 from the cell culture solution 15. Further, the cell removal filter 14 transmits the antibody 17. Therefore, the cell culture solution 15 mainly containing the antibody 17 flows downstream of the cell removal filter 14 of the first sending-out channel 18. The cell culture solution 15 from which the antibody-producing cell 16 has been removed by the cell removal filter 14 in this way is called a culture supernatant liquid. Hereinafter, the cell culture solution 15 from which the antibody-producing cell 16 has been removed by the cell removal filter 14 will be referred to as a culture supernatant liquid 15A. The culture supernatant liquid 15A is an example of "fluid" according to the present disclosed technology. It should be noted that, in addition to the antibody 17, the culture supernatant liquid 15A also contains a cell-derived protein, a cell-derived deoxyribonucleic acid (DNA), an aggregate of the antibody 17, a virus, and the like. These cell-derived protein, the cell-derived DNA, the aggregate of the antibody 17, the virus, and the like are also examples of a "measurement target substance" according to the present disclosed technology. It should be noted that the cell removal filter 14 may be an alternating tangential flow filtration (ATF) filter.

The flow cell 10 is connected to the first sending-out channel 18 on the downstream side of the cell removal filter 14. The culture supernatant 15A from the first delivery path 18 flows through the flow cell 10 at a preset flow rate. A sending-out pump (not shown) is provided downstream of the cell removal filter 14 in the first sending-out channel 18 (between the cell removal filter 14 and the flow cell 10). The sending-out pump sends out the culture supernatant liquid 15A toward the flow cell 10 at a flow rate of equal to or greater than 200 cc/min, for example, 300 cc/min.

A second sending-out channel 19 is also connected to the flow cell 10. The culture supernatant liquid 15A that has flowed in the flow cell 10 from the first sending-out channel 18 flows out to the second sending-out channel 19. The second sending-out channel 19 is connected to, for example, a purification unit that purifies the antibody 17 from the culture supernatant liquid 15A by using a chromatography device, and sends out the culture supernatant liquid 15A from the flow cell 10 to the purification unit.

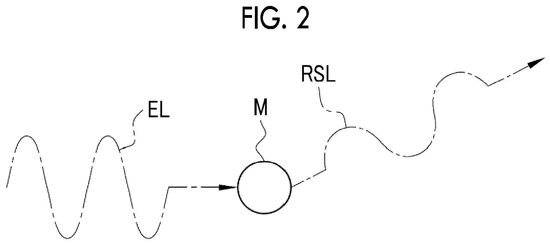

As shown in FIG. 2 as an example, the Raman spectrometer 11 is a device that evaluates a substance M by using the characteristics of Raman scattered light RSL. In a case in which the substance M is irradiated with excitation light EL, the excitation light EL interacts with the substance M to generate the Raman scattered light RSL having a wavelength different from the excitation light EL. A wavelength difference between the excitation light EL and the Raman scattered light RSL corresponds to the energy of the molecular vibration of the substance M. For this reason, it is possible to obtain the Raman scattered light RSL having different wave numbers between the substances M having different molecular structures. The excitation light EL is an example of "measurement light" according to the present disclosed technology. The Raman scattered light RSL is an example of "return light" according to the present disclosed technology. It should be noted that it is preferable that the Raman scattered light RSL is a Stokes ray out of the Stokes ray and an anti-Stokes ray.

Returning to FIG. 1, the Raman spectrometer 11 is composed of a measurement head 25 and an analyzer 26. The measurement head 25 is connected to the analyzer 26 via a cable 27. In addition, the measurement head 25 is attached to the flow cell 10. In the following description, the measurement head 25 side will be referred to as "upper" or "proximal end", and the flow cell 10 side will be referred to as "lower", "bottom", or "distal end".

The analyzer 26 incorporates a light source that emits the excitation light EL. The excitation light EL emitted from the light source is guided to the measurement head 25 through the cable 27. The measurement head 25 emits the excitation light EL from a distal end. The culture supernatant liquid 15A that flows in the flow cell 10 is irradiated with the excitation light EL. The Raman scattered light RSL is generated by the interaction between the excitation light EL and the antibody 17 or the like in the culture supernatant liquid 15A. The measurement head 25 receives the Raman scattered light RSL. The Raman scattered light RSL received by the measurement head 25 is output to the analyzer 26 through the cable 27.

The analyzer 26 generates Raman spectral data 28 by decomposing the Raman scattered light RSL for each wave number, and deriving an intensity value of the Raman scattered light RSL for each wave number. The Raman spectral data 28 is data in which the intensity value of the Raman scattered light RSL is registered for each wave number. In FIG. 1, the Raman spectral data 28 is data in which intensity values of the Raman scattered light RSL in a range of wave numbers of 700 cm⁻¹ to 1800 cm⁻¹ are derived in increments of 1 cm⁻¹. It should be noted that a graph shown below the Raman spectral data 28 is a graph in which the intensity value of the Raman spectral data 28 is plotted for each wave number and the plotted points are connected with a line. The Raman spectral data 28 is an example of "physical property data" according to the present disclosed technology.

In this way, the measurement system 2 allows the culture supernatant liquid 15A, which is obtained from the culture tank 13 in which the antibody-producing cell 16 is cultured, to flow into the flow cell 10. Then, the culture supernatant liquid 15A flowing into the flow cell 10 is irradiated with the excitation light EL via the sensor unit 25, so that the Raman spectral data 28 of the antibody 17 or the like contained in the culture supernatant liquid 15A is measured.

The Raman spectral data 28 is used to predict a state of the measurement target substance, such as a concentration of the antibody 17 in the culture supernatant 15A. In this case, for example, a machine learning model that outputs the concentration of the antibody 17 in response to the input of the Raman spectral data 28 is used. A concentration of the aggregate in the culture supernatant 15A may be predicted as the state of the measurement target substance. Instead of or in addition to the concentration, the concentration or the like may be predicted.

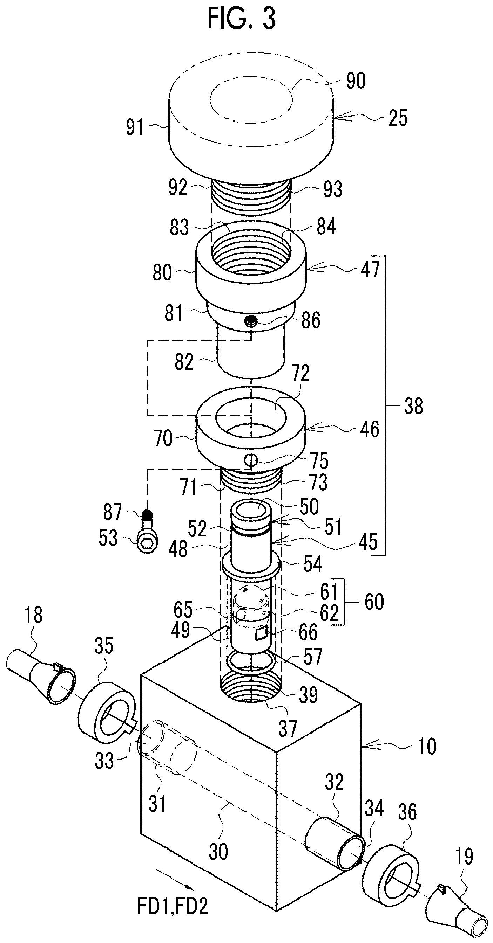

As shown in FIGS. 3, 4, and 5 as an example, the flow cell 10 is a rectangular parallelepiped member having a linear and circular cross-sectional flow passage 30 at an inner center. The flow passage 30 is an example of a "first flow passage" according to the disclosed technology. The flow cell 10 is made of, for example, metal such as Hastelloy. Alternatively, the flow cell 10 may be made of, for example, a resin such as a polyolefin-based resin. In a case of being made of a resin, the flow cell 10 may be a single-use.

A first connecting portion 31 and a second connecting portion 32 in a cylindrical boss shape are provided on both end surfaces of the flow cell 10 facing each other. The first connection portion 31 has an inlet 33 of the flow passage 30, and the second connection portion 32 has an outlet 34 of the flow passage 30. A direction parallel to the flow passage 30 from an inlet 33 toward the outlet 34 is a flow direction FD1 of the culture supernatant 15A of the flow passage 30. The flow direction FD1 is an example of a "flow direction of fluid in first flow passage" according to the disclosed technology.

The first delivery path 18 and the first connecting portion 31 are liquid-tightly connected to each other by a ferrule joint. The ferrule joint is composed of a ferrule (not shown) formed at one end of the first delivery path 18 and one end of the first connecting portion 31, a gasket (not shown) sandwiched in a groove of the ferrule, and a first clamp 35 that fixes the one end of the first delivery path 18 and the one end of the first connecting portion 31. Similarly, the second delivery path 19 and the second connecting portion 32 are liquid-tightly connected to each other by a ferrule joint including a second clamp 36. Parallel screws or tapered screws may be used to connect the first delivery path 18 and the first connecting portion 31 and the second delivery path 19 and the second connecting portion 32.

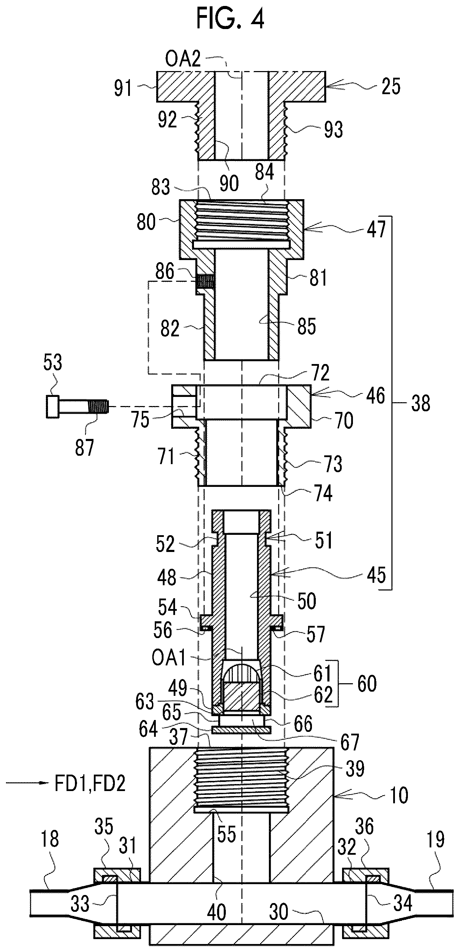

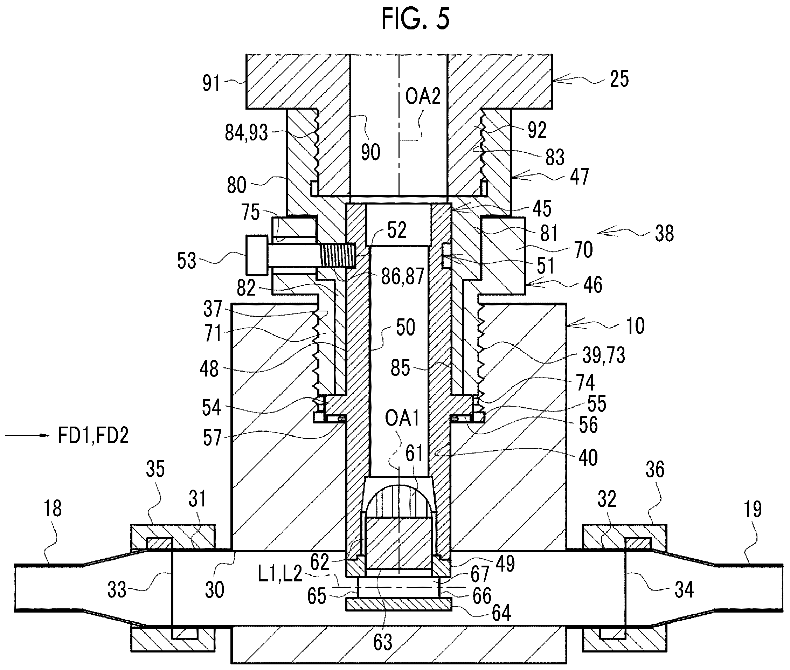

An attachment hole 37 is provided at a center of an upper surface of the flow cell 10. The attachment hole 37 is a circular hole for attachably and detachably attaching a probe unit 38 for spectroscopic analysis (hereinafter, simply referred to as a unit) to the flow cell 10, and a screw 39 is cut on an inner wall surface. The attachment hole 37 is connected to a fitting hole 40 (see FIGS. 4 and 5). The fitting hole 40 is also a circular hole, and the center thereof matches the attachment hole 37. The fitting hole 40 has a diameter smaller than the attachment hole 37 by one size. The fitting hole 40 penetrates the flow passage 30.

The unit 38 is composed of a probe 45, a rotation restriction member 46, and a connecting member 47. The unit 38 is made of, for example, metal such as Hastelloy. Alternatively, the unit 38 may be made of, for example, a resin such as a polyolefin-based resin. In a case of being made of a resin, the unit 38 may be a single-use. The rotation restriction member 46 is an example of a "displacement restriction member" according to the disclosed technology.

The probe 45 is a cylindrical member having a diameter that matches a diameter of the fitting hole 40. The probe 45 is inserted into the attachment hole 37 and is fitted to the fitting hole 40 by an operator of the measurement system 2. As a result, the probe 45 is disposed in the flow cell 10. The probe 45 can be rotated by 360° in a circumferential direction in a state where the rotation restriction member 46 is not attached to the attachment hole 37, but is simply inserted into the attachment hole 37 and is fitted to the fitting hole 40. Here, the term "align" refers to, in addition to complete alignment, alignment in the sense of including error that is error generally allowed in the technical field to which the disclosed technology belongs and that is of a degree not contradicting the gist of the disclosed technology. The error referred to herein is preferably ±10% and more preferably ±5%.

The probe 45 includes a body portion 48 and a distal end portion 49. The body portion 48 has a linear and circular optical path 50 at an inner center. The excitation light EL and the Raman scattered light RSL pass through the optical channel 41. The excitation light EL passes through the optical path 50 from the measurement head 25 and the body portion 48 toward the distal end portion 49. On the contrary, the Raman scattered light RSL passes through the optical path 50 from the distal end portion 49 toward the body portion 48 and the measurement head 25.

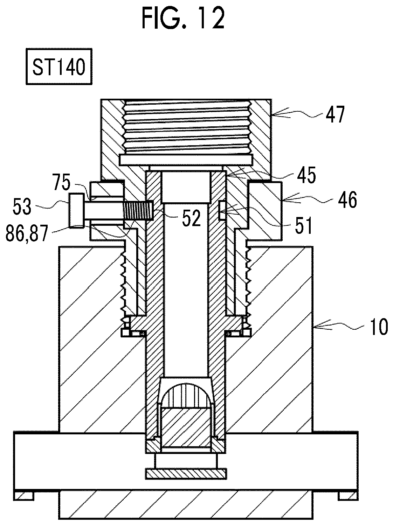

A groove 51 recessed in a radial direction is formed on an outer peripheral surface of the body portion 48 over the entire circumference. A tip of a bolt 53 is pressed against a bottom surface 52 of the groove 51 (see FIGS. 5 and 12). The bottom surface 52 of the groove 51 is an example of an "outer peripheral surface of the probe" according to the disclosed technology.

In addition, a flange portion 54 that protrudes in the radial direction is formed on an outer peripheral surface of a central portion of the body portion 48 over the entire circumference. In a case in which the probe 45 is inserted into the attachment hole 37 and is fitted to the fitting hole 40, the flange portion 54 comes into contact with a bottom surface 55 (see FIGS. 4 and 5) of the attachment hole 37 with its lower surface. That is, the flange portion 54 functions as a stopper that prevents the body portion 48 of the probe 45 on the upper side of the flange portion 54 from passing through the bottom surface 55 on the lower side.

A circular groove 56 (see FIGS. 4 and 5) is formed on the lower surface of the flange portion 54. An O-ring 57 is fitted into the groove 56. The O-ring 57 is rubber having elasticity. The O-ring 57 is crushed between the bottom surface 55 of the attachment hole 37 and the groove 56 to prevent the culture supernatant 15A flowing through the flow passage 30 from leaking to the outside. Although not shown, an O-ring for preventing the leakage of the culture supernatant 15A is also disposed between the body portion 48 and the distal end portion 49.

An optical system 60 is built in a lower portion of the body portion 48. The optical system 60 is disposed at a position where an optical axis OA1 (see FIGS. 4 and 5) thereof matches a center of the optical path 50. The second optical system 64 is an example of an "optical system" according to the technology of the present disclosure. In addition, the optical axis OA1 is an example of a "first optical axis" according to the disclosed technology.

The optical system 60 is composed of a hemispherical lens 61 and a transparent plate 62. The hemispherical lens 61 is a lens having a hemispherical shape, and is made of, for example, sapphire glass or quartz glass. The hemispherical lens 61 has a hemispherical incidence surface of the excitation light EL and a planar emission surface of the excitation light EL. The hemispherical lens 61 is an example of "a lens having a positive refractive power" according to the present disclosed technology.

The transparent plate 62 is a circular plate having an incidence surface and an emission surface 63 (see FIGS. 4, 5, and 7) of the excitation light EL that are parallel to each other, and is made of, for example, sapphire glass or quartz glass. The transparent plate 62 is an example of an "optical element" according to the present disclosed technology. In addition, the emission surface 63 of the transparent plate 62 is an example of a "measurement light emission surface of first optical system" and a "measurement light emission surface that comes into contact with fluid" according to the disclosed technology. Here, the term "parallel" refers to parallel in a meaning including an error that is generally allowed in the technical field to which the present disclosed technology belongs and that does not contradict the gist of the present disclosed technology, in addition to completely parallel. The error referred to herein is preferably ±10% and more preferably ±5%.

Curvatures of the emission surface of the hemispherical lens 61 and the incidence surface 62 of the transparent plate 62 are the same (in this case, 0). The emission surface of the hemispherical lens 61 and the incidence surface of the transparent plate 62 may be fixedly bonded to each other by an adhesive or the like, or may be simply held at the distal end portion 49 in a state where the surfaces are simply joined to each other without using an adhesive or the like. Here, "the same" refers to the same in the sense of including an error generally allowed in the technical field to which the technology of the present disclosure belongs, which is the error to the extent that it does not contradict the purpose of the technology of the present disclosure, in addition to the exact same. The error referred to herein is preferably ±10% and more preferably ±5%.

The distal end portion 49 has a cylindrical container shape in which an upper side connected to the body portion 48 is open, a lower side is closed by a flat bottom plate 64 (see FIGS. 4, 5, and 7), and a periphery is closed by a circumferential plate erected from the bottom plate 64 to the upper side. an inlet 65 and an outlet 66 of the culture supernatant 15A are formed at positions that are 180° symmetrically with respect to a center portion of the circumferential plate. The inlet 65 and the outlet 66 have a rectangular shape, more accurately a square shape, and are surrounded by a wall surface. A flow passage 67 (see FIGS. 4 and 5) through which the culture supernatant 15A flows is configured by the inlet 65 and the outlet 66 and a space formed by the bottom plate 64 and the circumferential plate. A direction parallel to the flow passage 67 from the inlet 65 toward the outlet 66 is a flow direction FD2 of the culture supernatant 15A of the flow passage 67. The flow passage 67 is an example of a "second flow passage" according to the disclosed technology. In addition, the flow direction FD2 is an example of a "flow direction of fluid in second flow passage" according to the disclosed technology.

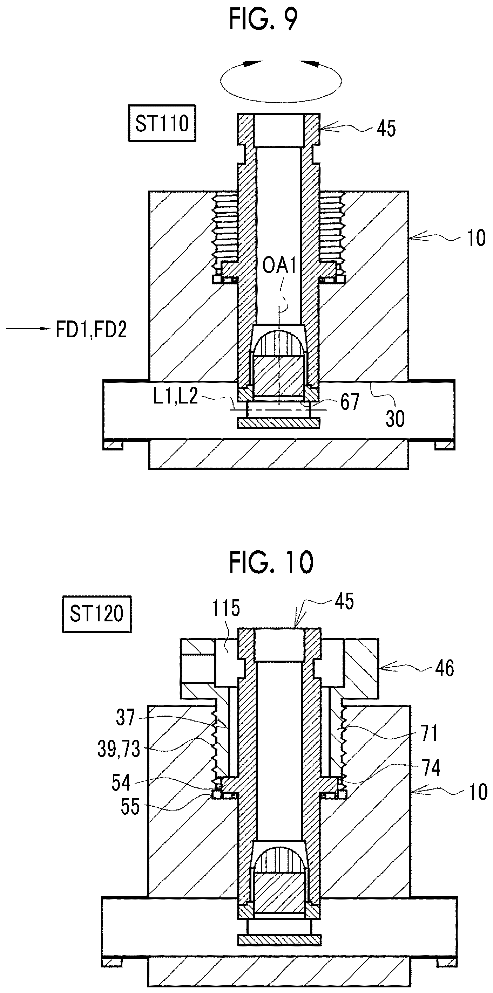

The attachment hole 37 is formed at a depth at which the center of the flow passage 30 and the center of the flow passage 67 match each other in a case in which the flange portion 54 comes into contact with the bottom surface 55. Then, the probe 45 is rotated around the optical axis OA1 by the operator in a state where the rotation restriction member 46 is not attached to the attachment hole 37, and the orientation thereof is aligned with an orientation in which the flow direction FD2 matches the flow direction FD1 (see FIG. 9). In this way, since the center of the flow passage 30 and the center of the flow passage 67 match each other, and the flow direction FD1 and the flow direction FD2 match each other, a line L1 connecting the center of the inlet 33 and the center of the outlet 34 of the flow passage 30 and a line L2 connecting the center of the inlet 65 and the center of the outlet 66 of the flow passage 67 match each other (see FIG. 5). Here, the term "align" refers to, in addition to complete alignment, alignment in the sense of including error that is error generally allowed in the technical field to which the disclosed technology belongs and that is of a degree not contradicting the gist of the disclosed technology. The error referred to herein is preferably ±10% and more preferably ±5%. More specifically, the concept that the line L1 and the line L2 match each other is, for example, a concept that allows a deviation of ± 3°. The center of the flow passage 30 and the center of the flow passage 67 do not necessarily have to match each other.

The rotation restriction member 46 includes a large-diameter portion 70 on the proximal end side and a small-diameter portion 71 on the distal end side. A circular through-hole 72 is formed at an inner center of the rotation restriction member 46. The through-hole 72 has a diameter larger than the diameter of the probe 45 by one size. The through-hole 72 has a diameter that is smaller than the large-diameter portion 70 and the small-diameter portion 71 at a boundary portion between the large-diameter portion 70 and the small-diameter portion 71. The probe 45 is inserted into the through-hole 72. Therefore, the probe 45 is an inner cylinder, and the rotation restriction member 46 is an outer cylinder.

A screw 73 is cut in the small-diameter portion 71. The screw 73 is threaded into the screw 39 of the attachment hole 37. The rotation restriction member 46 is attachable to and detachable from the flow cell 10 by the screws 39 and 73.

In a case in which the rotation restriction member 46 is attached to the flow cell 10 via the attachment hole 37, a distal end portion 74 (see FIGS. 4 and 5) of the small-diameter portion 71 of the rotation restriction member 46 is pressed against the flange portion 54 (see FIGS. 5 and 10). The flange portion 54 is sandwiched between the bottom surface 55 of the attachment hole 37 and the distal end portion 74 of the small-diameter portion 71 of the rotation restriction member 46. As a result, the rotation restriction member 46 restricts the rotation of the probe 45 around the optical axis OA1. The distal end portion 74 is an example of an "end portion of the displacement restriction member" according to the disclosed technology.

A through-hole 75 is formed at a position of the large-diameter portion 70 corresponding to the groove 51 of the probe 45. A diameter of the through-hole 75 is larger than a diameter of the bolt 53. The bolt 53 is inserted into the through-hole 75.

The connecting member 47 includes a large-diameter portion 80, a medium-diameter portion 81, and a small-diameter portion 82 in order from the proximal end side. A diameter of the large-diameter portion 80 is larger than a diameter of the through-hole 72 in the large-diameter portion 70 of the rotation restriction member 46. A diameter of the medium-diameter portion 81 is slightly smaller than a diameter of the through-hole 72 in the large-diameter portion 70 of the rotation restriction member 46. In addition, a diameter of the small-diameter portion 71 is slightly smaller than a diameter of the through-hole 72 that is smaller than the large-diameter portion 70 and the small-diameter portion 71 at the boundary portion between the large-diameter portion 70 and the small-diameter portion 71. Therefore, the connecting member 47 is inserted into a space 115 (see FIG. 10) between the probe 45 and the rotation restriction member 46 in a state where there is a slight backlash with the rotation restriction member 46. In a case in which the connecting member 47 is inserted into the space 115 between the probe 45 and the rotation restriction member 46, in the radial direction, the medium-diameter portion 81 faces the large-diameter portion 70 of the rotation restriction member 46, and the small-diameter portion 82 faces the small-diameter portion 71 of the rotation restriction member 46.

A circular attachment hole 83 is formed at an inner center of the connecting member 47. A screw 84 is cut on an inner wall surface of the attachment hole 83. The attachment hole 83 is connected to a fitting hole 85 (see FIGS. 4 and 5). The fitting hole 85 is also a circular hole, and the center thereof matches the attachment hole 83. The fitting hole 85 has a diameter smaller than the attachment hole 83 by one size.

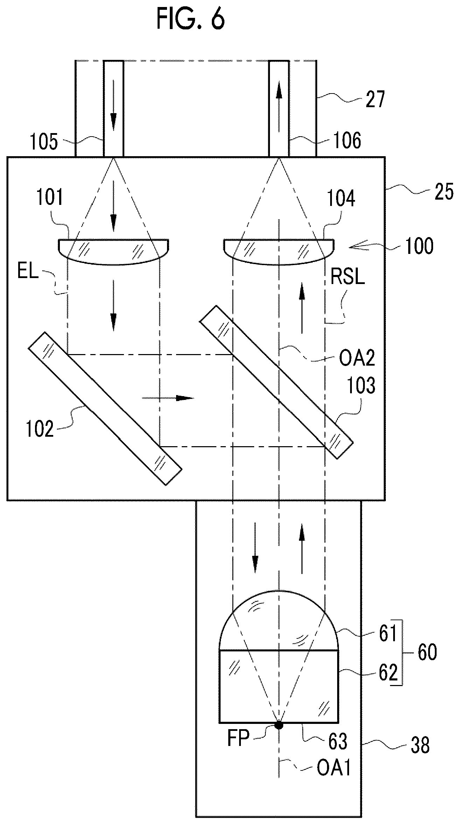

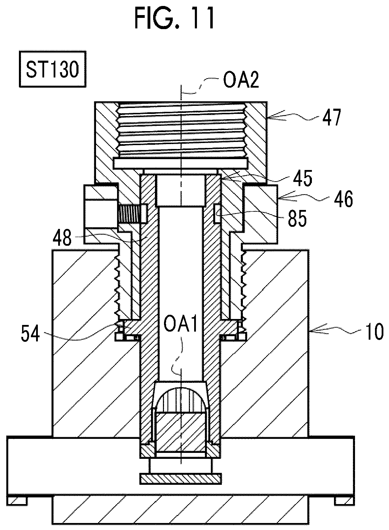

A diameter of the fitting hole 85 matches the diameter of the probe 45, and the probe 45 is fitted to the fitting hole 85. More specifically, the diameter of the probe 45 and the fitting hole 85 is, for example, 12.1 mm (φ12.1). The fitting tolerance of the probe 45 is, for example, H7 (0 to +18 µm), and the fitting tolerance of the fitting hole 85 is, for example, G6 (+6 µm to +17 µm). By fitting the probe 45 to the fitting hole 85, in other words, by fitting the probe 45 to the connecting member 47, axial alignment between the optical axis OA1 of the optical system 60 and an optical axis OA2 (see FIG. 6) of an optical system 100 built in the measurement head 25 is performed (see FIG. 11). The second optical system 64 is an example of an "optical system" according to the technology of the present disclosure. In addition, the optical axis OA2 is an example of a "second optical axis" according to the disclosed technology.

A screw hole 86 is formed at a position of the medium-diameter portion 81 corresponding to the groove 51 of the probe 45 and the through-hole 75 of the rotation restriction member 46. The screw hole 86 is a through-hole, and faces the bottom surface 52 of the groove 51 of the probe 45 in a case in which the probe 45 is fitted to the connecting member 47. A screw 87 cut on a distal end portion of the bolt 53 is threaded into the screw hole 86. A hexagonal hole for inserting a hexagonal wrench is formed in a head of the bolt 53. After the probe 45 is fitted to the connecting member 47, the bolt 53 is inserted into the through-hole 75 and the screw 87 is threaded into the screw hole 86 by the operator. In this case, the probe 45 and the connecting member 47 are fixed by pressing the tip of the bolt 53 against the bottom surface 52 of the groove 51 of the probe 45. The bolt 53 may be made of metal or a resin.

The fitting hole 85 has a length substantially the same as a length of the body portion 48 of the probe 45 on the upper side of the flange portion 54. Then, in a case in which the connecting member 47 is inserted into the space 115 between the probe 45 and the rotation restriction member 46 and the probe 45 is fitted to the connecting member 47, a distal end portion of the medium-diameter portion 81 comes into contact with a bottom surface of the through-hole 72 in the large-diameter portion 70 of the rotation restriction member 46. In addition, the distal end portion of the small-diameter portion 71 comes into contact with an upper surface of the flange portion 54.

The measurement head 25 has a linear and circular optical path 90 at an inner center. The excitation light EL and the Raman scattered light RSL pass through the optical path 90 as in the optical path 50 of the probe 45. A center of the optical path 90 matches the optical axis OA2 of the optical system 100 built in the measurement head 25.

The measurement head 25 includes a body portion 91 and a distal end portion 92. A diameter of the distal end portion 92 is smaller than a diameter of the body portion 91. A diameter of the distal end portion 92 matches a diameter of the attachment hole 83 of the connecting member 47. A screw 93 is cut in the distal end portion 92. The screw 93 is threaded into the screw 84 of the attachment hole 83 of the connecting member 47. The connecting member 47 and the unit 38 are attachable to and detachable from the measurement head 25 by the screws 84 and 93.

As shown in FIG. 6 as an example, the measurement head 25 incorporates the optical system 100. The optical system 100 includes a collimating lens 101, a mirror 102, a dichroic filter 103, and a condenser lens 104.

The collimating lens 101 is provided at a position facing an excitation light optical fiber 105 laid in the cable 27. The excitation light EL guided from the analyzer 26 by the excitation light optical fiber 105 is incident on the collimating lens 101. The collimating lens 101 converts the excitation light EL into parallel light and emits the parallel light to the mirror 102. The mirror 102 reflects the parallel light of the excitation light EL toward the dichroic filter 103.

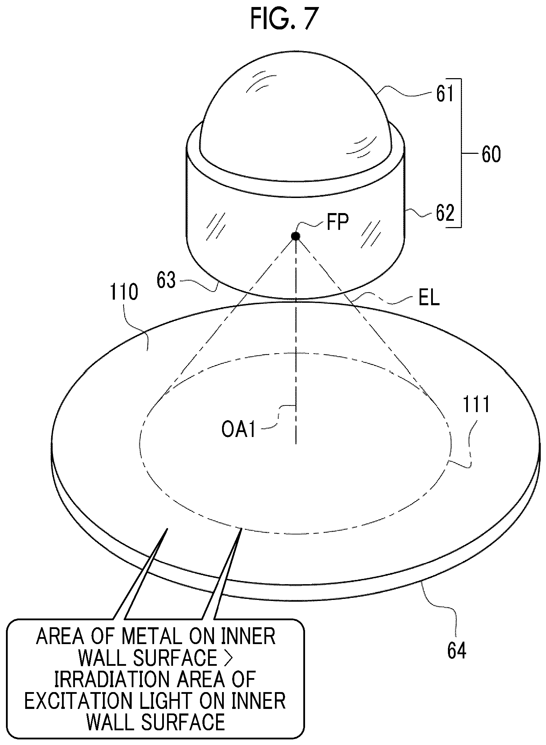

The dichroic filter 103 reflects the excitation light EL from the mirror 102 toward the optical system 60 of the probe 45. The excitation light EL transmits through the optical system 60 and is condensed at a condensing position FP. A focal length is determined by a diameter and a refractive index of the hemispherical lens 61, and the focusing position FP is determined by the focal length. In this case, the focusing position FP has a dot shape. The condensing position FP is between the emission surface 63 of the transparent plate 62 and an inner wall surface 110 (see FIG. 7) of the bottom plate 64 of the distal end portion 49. Ideally, the condensing position FP matches a point at which the optical axis OA1 intersects the emission surface 63 of the transparent plate 62. That is, the condensing position FP is positioned on the emission surface 63 of the transparent plate 62.

The dichroic filter 103 transmits the Raman scattered light RSL captured by the optical system 60 and emits the Raman scattered light RSL to the condenser lens 104. The condenser lens 104 is provided at a position facing a Raman scattered light optical fiber 106 laid in the cable 27. The condenser lens 104 condenses the Raman scattered light RSL from the dichroic filter 103 into the Raman scattered light optical fiber 106. The optical axis OA2 of the optical system 100 is a line passing through the center of the dichroic filter 103 and the condenser lens 104.

As shown in FIG. 7 as an example, the excitation light EL passing through the condensing position FP spreads in a conical shape from the condensing position FP toward the inner wall surface 110 of the bottom plate 64 of the distal end portion 49, and is finally emitted to the inner wall surface 110. Reference numeral 111 indicates an irradiation region of the excitation light EL on the inner wall surface 110. An irradiation region 111 is a circle centered on the optical axis OA1. A diameter of the irradiation region 111 is smaller than a diameter of the inner wall surface 110. In other words, an area of the metal on the inner wall surface 110 is larger than an irradiation area of the excitation light EL on the inner wall surface 110 (an area of the metal on the inner wall surface 110 > an irradiation area of the excitation light EL on the inner wall surface 110).

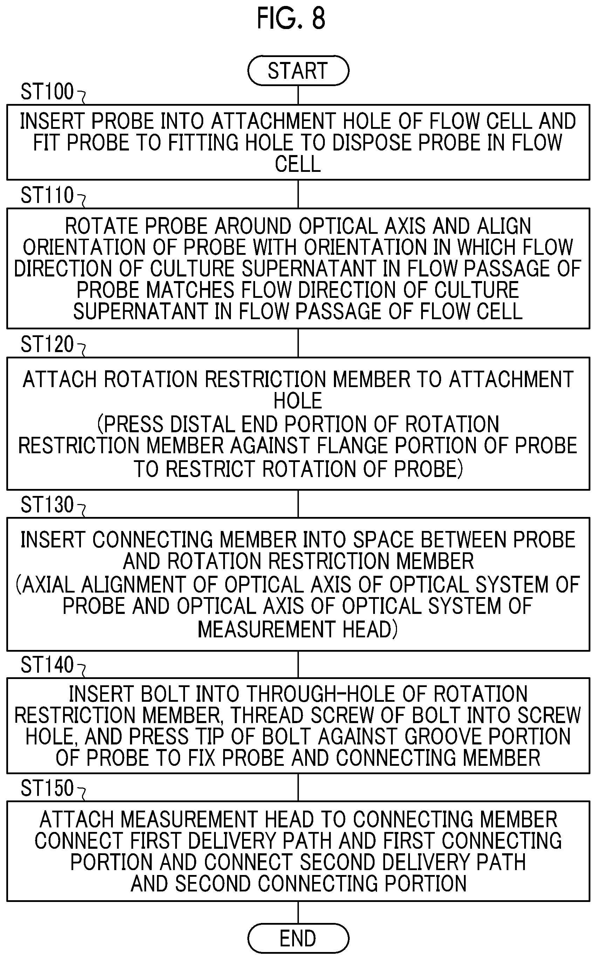

Next, an action of the above-described configuration will be described with reference to a flowchart shown in FIG. 8 and state diagrams shown in FIGS. 9 to 12 as an example. In FIGS. 9 to 12, only the configurations related to the description are designated by reference numerals to avoid complication.

First, as shown in step ST100 of FIG. 8, the operator inserts the probe 45 into the attachment hole 37 of the flow cell 10 and fits the probe 45 to the fitting hole 40 to dispose the probe 45 in the flow cell 10. The lower surface of the flange portion 54 of the probe 45 comes into contact with the bottom surface 55 of the attachment hole 37. As a result, the center of the flow passage 30 and the center of the flow passage 67 match each other.

As shown in step ST110 of FIG. 8 and FIG. 9, the operator rotates the probe 45 around the optical axis OA1 and aligns the orientation of the probe 45 with an orientation in which the flow direction FD2 of the culture supernatant 15A in the flow passage 67 of the probe 45 matches the flow direction FD1 of the culture supernatant 15A in the flow passage 30 of the flow cell 10. By performing the procedures of step ST100 and step ST110, the line L1 connecting the center of the inlet 33 and the center of the outlet 34 of the flow passage 30 and the line L2 connecting the center of the inlet 65 and the center of the outlet 66 of the flow passage 67 match each other.

Next, as shown in step ST120 of FIG. 8 and FIG. 10, the operator screws the screw 73 of the small-diameter portion 71 of the rotation restriction member 46 into the screw 39 of the attachment hole 37 of the flow cell 10 to attach the rotation restriction member 46 to the attachment hole 37. In this case, the distal end portion 74 of the small-diameter portion 71 of the rotation restriction member 46 is pressed against the flange portion 54 of the probe 45, so that the rotation of the probe 45 around the optical axis OA1 is restricted.

In a case in which the rotation restriction member 46 is attached to the flow cell 10, a space 115 is formed between the probe 45 and the rotation restriction member 46. As shown in step ST130 of FIG. 8 and FIG. 11, the operator inserts the connecting member 47 into the space 115. As a result, the body portion 48 of the probe 45 on the upper side of the flange portion 54 is fitted to the fitting hole 85 of the connecting member 47. In this way, the probe 45 is fitted to the connecting member 47, so that the optical axis OA1 of the optical system 60 and the optical axis OA2 of the optical system 100 are aligned.

Subsequently, as shown in step ST140 of FIG. 8 and FIG. 12, the operator inserts the bolt 53 into the through-hole 75 of the rotation restriction member 46. In addition, the screw 87 of the bolt 53 is threaded into the screw hole 86 of the connecting member 47. In this case, the probe 45 and the connecting member 47 are fixed by pressing the tip of the bolt 53 against the bottom surface 52 of the groove 51 of the probe 45.

Finally, as shown in step ST150 of FIG. 8, the operator screws the screw 93 of the distal end portion 92 of the measurement head 25 into the screw 84 of the attachment hole 83 of the connecting member 47 to attach the measurement head 25 to the connecting member 47. In addition, the first delivery path 18 and the first connecting portion 31 and the second delivery path 19 and the second connecting portion 32 are connected. As a result, the measurement system 2 consisting of the flow cell 10 and the Raman spectrometer 11 is incorporated into the cell culture unit 12. The measurement head 25 may be attached to the connecting member 47 before step ST130. In addition, the first delivery path 18 and the first connecting portion 31 and the second delivery path 19 and the second connecting portion 32 may be connected before step ST100.

The culture supernatant 15A obtained from the culture tank 13 in which the antibody-producing cell 16 is cultured flows through the flow passage 30 of the flow cell 10 and the flow passage 67 of the probe 45. In the distal end portion 49, the culture supernatant 15A is irradiated with the excitation light EL that has passed through the cable 27, the optical system 100, the optical path 90, the optical path 50, and the optical system 60. The excitation light EL is focused at the focusing position FP by the optical system 55.

The Raman scattered light RSL is generated by the interaction between the excitation light EL and the antibody 17 or the like in the culture supernatant liquid 15A. The Raman scattered light RSL is captured by the optical system 60 and is output to the analyzer 26 through the optical path 50, the optical path 90, the optical system 100, and the cable 27. The Raman scattered light RSL is converted into the Raman spectral data 28 by the analyzer 26.

As described above, the unit 38 includes the probe 45 and the rotation restriction member 46. The optical system 60 is built in the probe 45. The optical system 60 irradiates the antibody 17 or the like in the culture supernatant 15A, which is the measurement target substance of the Raman spectral data 28, with the excitation light EL and captures the Raman scattered light RSL from the antibody 17 or the like. The probe 45 is attachable to and detachable from the measurement head 25 of the Raman spectrometer 11 incorporating the optical system 100. The probe 45 is disposed in the flow cell 10, which is a container for the culture supernatant 15A including the antibody 17 or the like. The rotation restriction member 46 restricts the rotation of the probe 45 with respect to the flow cell 10 in a state where the orientation of the probe 45 is aligned with the orientation corresponding to the flow of the culture supernatant 15A. Therefore, the orientation of the probe 45 can be aligned with the orientation corresponding to the flow of the culture supernatant 15A in a state where the measurement head 25 is separated from the probe 45, and the state can be maintained. Therefore, it is possible to contribute to the accurate measurement of the Raman spectral data 28.

As shown in FIG. 1 and the like, the container in which the probe 45 is disposed is the flow cell 10 having the flow passage 30 through which the culture supernatant 15A flows. Therefore, the Raman spectral data 28 of the culture supernatant liquid 15A can be easily measured without making a modification such as providing the attachment portion of the distal end portion 40 in the culture tank 13.

As shown in FIG. 3 and the like, the probe 45 has the flow passage 67 through which the culture supernatant 15A flows. Therefore, it is more necessary to maintain the state where the orientation of the probe 45 is aligned with the orientation corresponding to the flow of the culture supernatant 15A. The effect of being able to maintain the state where the orientation of the probe 45 is aligned with the orientation corresponding to the flow of the culture supernatant 15A can be further exhibited.

As shown in FIG. 5, step ST110 of FIG. 8, and FIG. 9, the orientation of the probe 45 is aligned with an orientation in which the flow direction FD2 of the culture supernatant 15A in the flow passage 67 of the probe 45 matches the flow direction FD1 of the culture supernatant 15A in the flow passage 30 of the flow cell 10. Therefore, the culture supernatant 15A smoothly flows through the flow passage 30 and the flow passage 67 without causing a pressure loss, and damage to the antibody 17 or the like in the culture supernatant 15A is reduced. Therefore, it is possible to contribute to the accurate measurement of the Raman spectral data 28.

As shown in FIG. 3 and the like, the flow passage 67 has the inlet 65 and the outlet 66 of the culture supernatant 15A surrounded by a wall surface. Therefore, the flow of the culture supernatant 15A near the condensing position FP of the excitation light EL can be stabilized. The bias of the component in the culture supernatant liquid 15A in the vicinity of the focusing position FP is reduced, and the measurement stability of the Raman spectral data 28 can be improved.

As shown in FIG. 3 and the like, the unit 38 includes the connecting member 47 that attachably and detachably connects the measurement head 25 and the probe 45. Therefore, the measurement head 25 and the probe 45 can be easily attached and detached.

As shown in FIG. 11, the probe 45 is fitted to the connecting member 47, so that the optical axis OA1 of the optical system 60 and the optical axis OA2 of the optical system 100 are aligned. Therefore, the optical axis OA1 and the optical axis OA2 can be easily aligned. A decrease in the S/N ratio of the Raman spectral data 28 due to the optical axis deviation can be prevented.

In the present example, the probe 45 is attachable to and detachable from the measurement head 25 in order to facilitate the handling of the probe 45 that needs to be aligned with the orientation corresponding to the flow of the culture supernatant 15A. However, in a case in which the probe 45 is attachable to and detachable from the measurement head 25, the optical axis OA1 of the optical system 60 and the optical axis OA2 of the optical system 100 need to be aligned in a case in which the unit 38 is attached to the flow cell 10. Therefore, in the present example, the probe 45 and the connecting member 47 are fitted to each other to provide a configuration in which the optical axis alignment can be easily performed.

As shown in FIG. 3 and the like, the connecting member 47 is attachable to and detachable from the measurement head 25. Therefore, the orientation of the probe 45 corresponding to the flow of the culture supernatant 15A and the optical axis alignment between the optical axis OA1 and the optical axis OA2 can be performed in a state where the unit 38 and the probe 45 are separated from the measurement head 25 that is difficult to handle.

As shown in FIGS. 3 to 5, 10, and 11, the probe 45 is an inner cylinder, the rotation restriction member 46 is an outer cylinder, and the connecting member 47 is inserted into the space 115 between the probe 45 and the rotation restriction member 46. Therefore, the connecting member 47 can be easily and stably attached to the probe 45.

As shown in FIG. 3 and the like, the through-hole 75 is formed in the rotation restriction member 46. In addition, the screw hole 86 that faces the bottom surface 52 of the groove 51 of the probe 45 is formed at a position of the connecting member 47 corresponding to the through-hole 75. Then, as shown in FIG. 12, the probe 45 and the connecting member 47 are fixed by pressing the tip of the bolt 53 that is inserted into the through-hole 75 and that is threaded into the screw hole 86 against the bottom surface 52. Therefore, the probe 45 and the connecting member 47 can be easily fixed.

As shown in FIG. 10, the rotation restriction member 46 restricts the rotation of the probe 45 around the optical axis OA1 of the optical system 60. Therefore, the state where the orientation of the probe 45 is aligned with the orientation corresponding to the flow of the culture supernatant 15A can be maintained. Therefore, it is possible to contribute to the accurate measurement of the Raman spectral data 28.

As shown in FIG. 3 and the like, the flange portion 54 that comes into contact with the bottom surface 55 of the attachment hole 37 formed in the flow cell 10 is formed on the outer peripheral surface of the probe 45. Then, as shown in FIG. 10, the rotation of the probe 45 is restricted by pressing the distal end portion 74 of the rotation restriction member 46 against the flange portion 54. Therefore, the rotation of the probe 45 can be easily restricted.

As shown in FIG. 7, the probe 45 has the inner wall surface 110 facing the emission surface 63 of the transparent plate 62. The probe 45 is made of metal. That is, a metal is disposed on at least a part of a surface of the inner wall surface 110. Therefore, it is possible to further reduce the risk in which the excitation light EL is emitted to the resin, the Raman scattered light RSL generated by the interaction between the excitation light EL and the resin is taken in, and the Raman spectral data 28 is adversely affected.

An area of the metal on the inner wall surface 110 is larger than an irradiation area of the excitation light EL on the inner wall surface 110. Therefore, it is possible to more reliably reduce the risk in which the excitation light EL is emitted to the resin, the Raman scattered light RSL generated by the interaction between the excitation light EL and the resin is taken in, and the Raman spectral data 28 is adversely affected.

In a case in which the probe 45 is made of a resin, a metal film of aluminum, copper, gold, or the like may be formed on the entire surface or a part of the inner wall surface 110 by plating. Further, a metal film may be formed on the entire surface or a part of the inner wall surface of the peripheral surface of the distal end portion 49 by plating. In a case in which the probe 45 is made of a resin, the effect of being able to reduce the risk of adversely affecting the Raman spectral data 28 by capturing the Raman scattered light RSL generated by the interaction between the excitation light EL and the resin can be further exhibited.

The Raman scattered light RSL is likely to reflect information derived from a functional group of an amino acid of a protein. Therefore, by using the physical property data as the Raman spectral data 28 as in the present example, it is possible to acquire the physical property data that clearly reflects the physical property such as the concentration of the antibody 17 which is a protein.

The biopharmaceutical including the antibody 17, which is the cell product, is called an antibody drug and is widely used not only for the treatment of chronic diseases, such as cancer, diabetes, and rheumatoid arthritis, but also for the treatment of rare diseases, such as hemophilia and a Crohn's disease. For this reason, according to this example in which the culture supernatant liquid 15A, which is obtained from the culture tank 13 in which the antibody-producing cell 16 is cultured and serves as a source of the antibody drug, is used as the fluid, it is possible to promote the development of the antibody drug that is widely used for the treatment of various diseases.

As shown in FIG. 3 and the like, the optical system 60 includes the hemispherical lens 61. The hemispherical lens 61 has a relatively high refractive power, and can reduce a distance between the emission surface of the excitation light EL of the hemispherical lens 61 and the condensing position FP. For this reason, the thickness of the transparent plate 62 in the direction of the optical axis OA1 can be reduced by that much. As a result, it is possible to contribute to a reduction in the size of the flow cell 10.

In addition, as shown in FIG. 3 and the like, the optical system 60 includes the transparent plate 62 having the emission surface 63 of the excitation light EL that comes into contact with the culture supernatant 15A and that is planar, in addition to the hemispherical lens 61. Therefore, a distance from the emission surface 63 to the condensing position FP can be reduced (in the present example, set to 0). For this reason, it is possible to reduce a concern that the excitation light EL may be attenuated by the culture supernatant liquid 15A. Therefore, it is possible to reduce a concern that the amount of the excitation light EL required for obtaining the Raman spectral data 28 capable of withstanding analysis may not be obtained. That is, the S/N ratio of the Raman spectral data 28 caused by the Raman scattered light RSL that is generated by the interaction between the excitation light EL and the antibody 17 or the like contained in the culture supernatant liquid 15A can be maintained at a higher level.

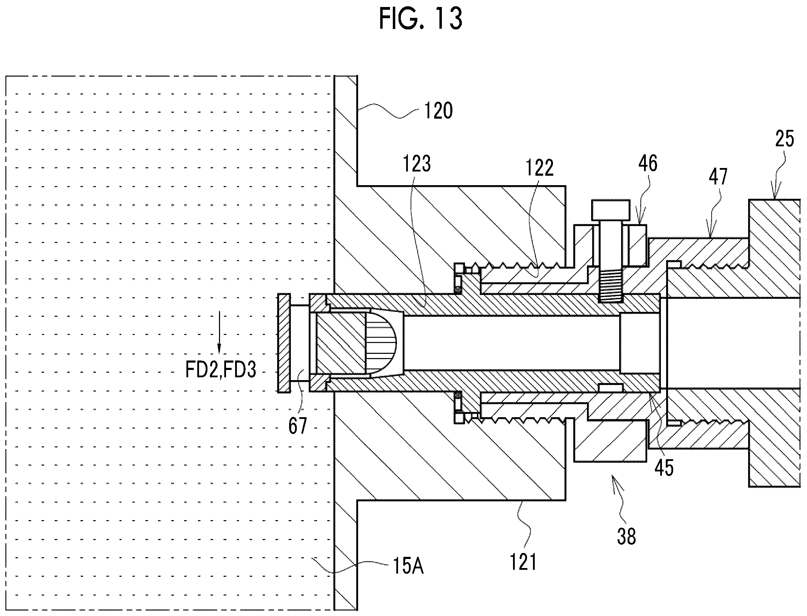

In the above-described embodiment, the flow cell 10 is exemplified as the container for the fluid, but the present disclosure is not limited thereto. As shown in FIG. 13 as an example, the unit 38 may be applied to a storage tank 120 of the culture supernatant 15A.

The storage tank 120 has an attachement portion 121 of the unit 38. An attachment hole 122 corresponding to the attachment hole 37 of the flow cell 10 and a fitting hole 123 corresponding to the fitting hole 40 of the flow cell 10 are formed in the attachement portion 121.

The storage tank 120 is installed, for example, between the cell culture unit 12 and the purification unit. A flow passage through which the culture supernatant 15A is supplied from the cell culture unit 12 and a flow passage through which the culture supernatant 15A is supplied to the purification unit (both not shown) are connected to the storage tank 120. Since the storage tank 120 receives the culture supernatant 15A from the cell culture unit 12 and delivers the culture supernatant 15A to the purification unit, a flow of the culture supernatant 15A from the top to the bottom, indicated by an arrow and a reference numeral FD3, occurs in the storage tank 120. In this example as well, as in the above-described embodiment, the orientation of the probe 45 is aligned with an orientation in which the flow direction FD3 and the flow direction FD2 of the culture supernatant 15A in the flow passage 67 match each other.

The container may be the culture tank 13. The fluid in this case is the cell culture solution 15. In addition, in this case, the attachement portion is provided in the culture tank 13, and the unit 38 is attached to the attachement portion. The flow direction in a case in which the container is the culture tank 13 is a flow direction of the cell culture solution 15 generated by a rotation of a stirring blade in the culture tank 13.

The connecting member 47 may be attached to the measurement head 25 in a non-attachable and detachable manner. That is, the measurement head 25 and the connecting member 47 may be integrated.

A method of restricting the rotation of the probe 45 around the optical axis OA1 is not limited to an exemplary method of pressing the distal end portion 74 of the rotation restriction member 46 against the flange portion 54 of the probe 45. For example, a method of fitting a protrusion formed in the distal end portion 74 of the rotation restriction member 46 to two or more fitting holes formed in the flange portion 54 may be used. In addition, a method of fixing the probe 45 and the connecting member 47 is not limited to a method of pressing the tip of the bolt 53 against the bottom surface 52 of the groove 51 of the probe 45. A method of using a stopper having a distal end portion that can be pressed in by spring force may be used.

Although the flow cell 10 and the rotation restriction member 46 are connected, the measurement head 25 and the connecting member 47 are connected, and the like by screwing, the present disclosure is not limited thereto. A connection by a plate spring-like claw that is hooked on a lower edge of the hole may be used.

The flow passage 67 of the probe 45 is not limited to the example having the inlet 65 and the outlet 66 surrounded by the wall surface. A probe having a cross section L-shaped distal end portion shown in FIGS. 13 and 19 of JP2021-048872A may be used. In addition, although the flow passage 67 is not provided, a probe that needs to align the orientation with the orientation corresponding to the flow of the culture supernatant 15A may be used, in which a member that affects the flow of the culture supernatant 15A is provided in the distal end portion 49 or a portion other than the distal end portion 49. In short, the probe may have directivity with respect to the flow direction of the fluid.

The inlet 65 and the outlet 66 are not limited to the rectangular shape, and may have a circular shape, an elliptical shape, or the like. In addition, the distal end portion 49 is not limited to the example of the cylindrical container shape. A square tubular container shape, a hexagonal tubular container shape, or the like may be used. Therefore, the bottom plate 63 is not limited to the circular shape shown in the example, and may have a rectangular shape, a hexagonal shape, or the like. In addition, the peripheral plate 66 is not limited to the curved surface shown in the example, and may be a flat surface.

The bottom plate 64 and the inner wall surface 110 of the bottom plate 64 may be a convex curved surface on the lower side following the shape of the flow passage 30 of the flow cell 10. In a case in which the inner wall surface 110 is a convex curved surface on the lower side, the inner wall surface 110 serves as a reflecting surface that directs the Raman scattered light RSL to the optical system 60. Therefore, it is possible to further increase the S/N ratio of the Raman spectral data 28. It should be noted that the curved surface that protrudes to the lower side may have a parabolic antenna shape.

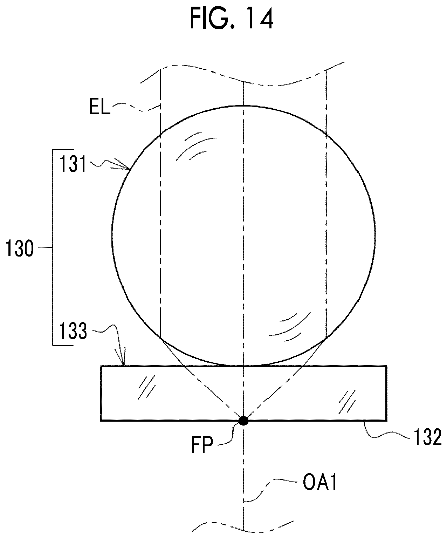

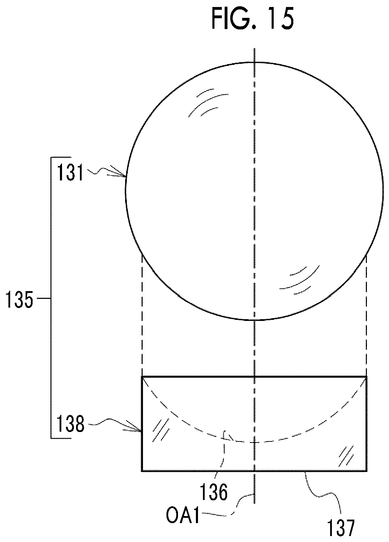

The lens constituting the optical system 60 is not limited to the example of the hemispherical lens 61. As an example, as in an optical system 130 shown in FIG. 14 and an optical system 135 shown in FIG. 15 as an example, a ball lens 131 that is a sphere may be used. The optical systems 130 and 135 are examples of a "first optical system" according to the disclosed technology. The ball lens 46 is an example of "a lens having a positive optical power" according to the technology of the present disclosure.

The optical system 130 shown in FIG. 14 is composed of the ball lens 131 and a transparent plate 133 having an incidence surface and an emission surface 132 of the excitation light EL that are planes. The ball lens 131 and the transparent plate 133 are held in a state of simply being in contact with each other without using an adhesive or the like. The transparent plate 133 is an example of an "optical element" according to the present disclosed technology. In addition, the emission surface 132 of the transparent plate 133 is an example of a "measurement light emission surface of first optical system" and a "measurement light emission surface that comes into contact with fluid" according to the disclosed technology. The ball lens 131 and the transparent plate 133 may be disposed in a state of being spaced from each other instead of being in contact with each other.

The optical system 135 shown in FIG. 15 is composed of the ball lens 131 and an optical element 138 having an incidence surface 136 of the excitation light EL and an emission surface 137 of the excitation light EL that are planes and that have a shape following the ball lens 131. The curvature of the incidence surface 136 is the same as the curvature of the ball lens 131. The ball lens 131 and the optical element 138 are fixedly bonded to each other by an adhesive or the like, or are held in a state where the surfaces are simply joined to each other without using an adhesive or the like. The emission surface 137 of the optical element 138 is an example of a "measurement light emission surface of first optical system" and a "measurement light emission surface that comes into contact with fluid" according to the disclosed technology.

The ball lens 131 has a higher refractive power than the hemispherical lens 61. Therefore, a distance between the emission surface of the ball lens 131 and the condensing position FP of the excitation light EL can be further reduced, and a thickness of the transparent plate 133 or the optical element 138 in the optical axis OA1 direction can be further reduced. As a result, it is possible to greatly contribute to the reduction in size of the flow cell.

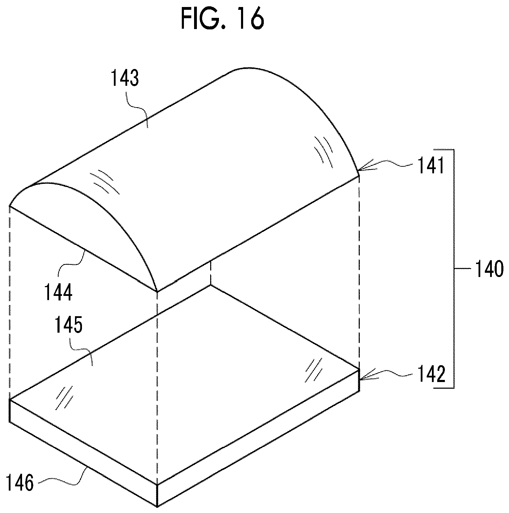

As an example, as in an optical system 140 shown in FIG. 16, a cylindrical lens 141 may be used as the lens having a positive refractive power. The optical system 140 includes a transparent plate 142 in addition to the cylindrical lens 141. The cylindrical lens 141 is a lens having a cross section of a half moon shape obtained by vertically dividing a cylinder. The cylindrical lens 141 includes an incident surface 143 for the excitation light EL, which is a spherical convex surface, and an emission surface 144 for the excitation light EL. The emission surface 144 is a rectangular flat surface. The second optical system 64 is an example of an "optical system" according to the technology of the present disclosure. The cylindrical lens 141 is an example of "a lens having a positive optical power" according to the technology of the present disclosure. The incident surface 143 of the cylindrical lens 141 may be an aspherical surface.

The transparent plate 142 is a rectangular plate that includes an incident surface 145 and an emission surface 146 for the excitation light EL parallel to each other. The curvature of the emission surface 144 of the cylindrical lens 141 and the curvature of the incident surface 145 of the transparent plate 142 are equal to each other (0 in this case), and the emission surface 144 and the incident surface 145 are bonded to each other. The transparent plate 142 is an example of an "optical element" according to the present disclosed technology. In addition, the emission surface 146 of the transparent plate 142 is an example of a "measurement light emission surface of first optical system" and a "measurement light emission surface that comes into contact with fluid" according to the disclosed technology.

The hemispherical lens 61 and the ball lens 131 condense the excitation light EL into a point, but the cylindrical lens 141 condenses the excitation light EL into a line. For example, the cylindrical lens 141 condenses the excitation light EL into a line parallel to the flow directions FD1 and FD2. Alternatively, the cylindrical lens 141 condenses the excitation light EL into a line perpendicular to the flow directions FD1 and FD2.

In a case in which the excitation light EL is condensed into a line parallel to the flow directions FD1 and FD2, a temporal change of the culture supernatant 15A flowing through the flow passage 67 can be reflected in the Raman spectral data 28. On the other hand, in a case in which the excitation light EL is condensed into a line perpendicular to the flow directions FD1 and FD2, a spatial change of the culture supernatant 15A flowing through the flow passage 67 can be reflected in the Raman spectral data 28. In either case, the measurement stability of the Raman spectral data 28 can be improved as compared to a case where the excitation light EL is condensed in the form of a dot.

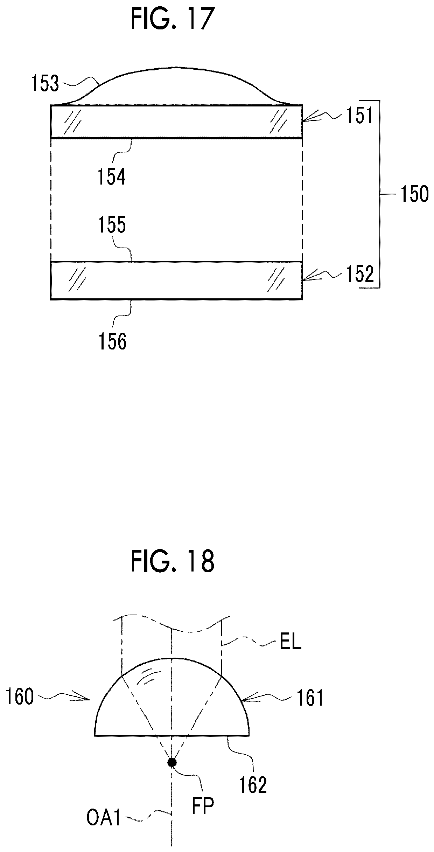

In addition, as in an optical system 150 shown in FIG. 17 as an example, a plano-convex lens 151 may be used as the lens having a positive refractive power. The optical system 150 includes a transparent plate 152 in addition to the plano-convex lens 151. The plano-convex lens 151 is a lens having an incidence surface 153 of the excitation light EL that is a convex surface having an aspherical shape and an emission surface 154 of the excitation light EL that is planar. The plano-convex lens 151 condenses the excitation light EL into a point. The plano-convex lens 151 is an example of a "lens having a positive refractive power" and an "aspherical lens" according to the disclosed technology.

The transparent plate 152 is a disk that includes an incident surface 155 and an emission surface 156 for the excitation light EL parallel to each other, like the transparent plate 62 and the like. The curvature of the emission surface 154 of the plano-convex lens 151 and the curvature of the incident surface 155 of the transparent plate 152 are equal to each other (0 in this case), and the emission surface 154 and the incident surface 155 are bonded to each other. The transparent plate 152 is an example of an "optical element" according to the present disclosed technology. In addition, the emission surface 156 of the transparent plate 152 is an example of a "measurement light emission surface of first optical system" and a "measurement light emission surface that comes into contact with fluid" according to the disclosed technology.

Further, since the incident surface 153 of the plano-convex lens 151 has an aspherical shape, spherical aberration can be suppressed as compared to the plano-convex lens including the spherical incident surface. A plano-convex lens having a spherical incidence surface may be used. In addition, a biconvex lens may be used as the lens having a positive refractive power.

The optical system may be formed by integrally forming the lens and the transparent plate as one lens, instead of bonding the lens and the transparent plate to each other.

In addition, as shown in FIG. 18 as an example, the optical system may be composed of only the lens without the transparent plate. An optical system 160 shown in FIG. 18 is composed of only a hemispherical lens 161. The hemispherical lens 161 has a hemispherical incidence surface of the excitation light EL and a planar emission surface 162 of the excitation light EL. The hemispherical lens 61 is an example of "a lens having a positive refractive power" according to the present disclosed technology. In addition, the emission surface 162 of the hemispherical lens 161 is an example of a "measurement light emission surface of first optical system" and a "measurement light emission surface that comes into contact with fluid" according to the disclosed technology.

As described above, the optical system 160 may be composed of only the hemispherical lens 161. The configuration can be simplified as compared to the optical system 60 and the like in combination with the optical element such as the transparent plate 62. The optical system may be composed of only the ball lens 131 shown in FIGS. 14 and 15, or may be composed of only the cylindrical lens 141 shown in FIG. 16. Further, the optical system may be composed of only the plano-convex lens 151 shown in FIG. 17.

The first connection portion 31 and the second connection portion 32 may be disposed on the lower side of the flow cell 10, and the flow passage 30 may be U-shaped. The shape of the flow cell 10 is not limited to the rectangular parallelepiped shape, and may be a cylindrical shape or a square cylindrical shape. The cross-sectional shape of the flow passage 30 is also not limited to the circular shape, and may be an elliptical shape or a rectangular shape. In addition, the flow cell 10, the unit 38, and the like may be formed of a composite material such as carbon fiber reinforced resin.

The measurement target substance is not limited to the antibody 17 or the like. The substance for which the Raman spectral data 28 is to be measured may be protein, peptide, nucleic acid (DNA or ribonucleic acid (RNA)), lipid, a virus, a virus subunit, a virus-like particle, and the like other than the antibody 17.

The cell product is not limited to the antibody 17 or the like. Examples of the cell product include cytokine (interferon, interleukin, or the like), hormone (insulin, glucagon, follicle-stimulating hormone, erythropoietin, or the like), a growth factor (insulin-like growth factor (IGF)-1, basic fibroblast growth factor (bFGF), or the like), a blood coagulation factor (seventh factor, eighth factor, ninth factor, or the like), an enzyme (lysosomal enzyme, deoxyribonucleic acid (DNA) degrading enzyme, or the like), a fragment crystallizable (Fc) fusion protein, a receptor, albumin, and a protein vaccine. Examples of the antibody 17 include a bispecific antibody, an antibody-drug conjugate, a low-molecular-weight antibody, and a sugar-chain-modified antibody.

The physical property data is not limited to the Raman spectral data 28. The physical property data may be infrared absorption spectrum data, near infrared absorption spectrum data, nuclear magnetic resonance spectrum data, ultraviolet visible absorption spectroscopy (UV-Vis) spectrum data, or fluorescence spectrum data.

The fluid is not limited to the culture supernatant liquid 15A. The cell culture solution 15 before being decellularized by the cell removal filter 14 may be used. A cell culture solution (so-called culture medium) that does not contain the cell product and that is not yet supplied to the culture tank 13 may be used. A purified solution obtained by purifying the culture supernatant liquid 15A by using the chromatography device in the purification unit may be used. The fluid is not limited to a liquid related to the cell culture, and may be, for example, water of a river collected to examine water quality pollution. A raw material (for example, polystyryllithium, a methanol aqueous solution, and the like) and/or a product (for example, a monomer or a polymer such as polystyrene) in a case in which a product, such as a monomer or a polymer (for example, polystyrene or the like), is continuously produced by flow synthesis may be used. The fluid is not limited to liquid, and may be gas.

The technology according to the following supplementary notes can be understood based on the above description.

### [Supplementary Note 1]

A probe unit for spectroscopic analysis, comprising:
a probe in which a first optical system for irradiating a measurement target substance of physical property data of a spectroscopic analysis apparatus with measurement light and for capturing returning light from the measurement target substance is built, and which is attachable to and detachable from a measurement head of the spectroscopic analysis apparatus in which a second optical system is built; and
a displacement restriction member that restricts a displacement of the probe with respect to a container for a fluid including the measurement target substance in a state where the probe is disposed in the container and an orientation of the probe is aligned with an orientation corresponding to a flow of the fluid.

### [Supplementary Note 2]

The probe unit for spectroscopic analysis according to Supplementary Note 1,
wherein the container is a flow cell having a first flow passage through which the fluid flows.

### [Supplementary Note 3]

The probe unit for spectroscopic analysis according to Supplementary Note 2,
wherein the probe has a second flow passage through which the fluid flows.

### [Supplementary Note 4]

The probe unit for spectroscopic analysis according to Supplementary Note 3,
wherein the orientation of the probe is aligned with an orientation in which a flow direction of the fluid in the second flow passage matches a flow direction of the fluid in the first flow passage.

### [Supplementary Note 5]

The probe unit for spectroscopic analysis according to Supplementary Note 3 or 4,
wherein the second flow passage has an inlet of the fluid and an outlet of the fluid surrounded by a wall surface.

### [Supplementary Note 6]

The probe unit for spectroscopic analysis according to any one of Supplementary Notes 1 to 5, further comprising:
a connecting member that attachably and detachably connects the measurement head and the probe.

### [Supplementary Note 7]

The probe unit for spectroscopic analysis according to Supplementary Note 6,
wherein the probe is fitted to the connecting member to perform axial alignment between a first optical axis of the first optical system and a second optical axis of the second optical system.

### [Supplementary Note 8]

The probe unit for spectroscopic analysis according to Supplementary Note 6 or 7,
wherein the connecting member is attachable to and detachable from the measurement head.

### [Supplementary Note 9]

The probe unit for spectroscopic analysis according to any one of Supplementary Notes 6 to 8,
wherein the probe is an inner cylinder,
the displacement restriction member is an outer cylinder, and
the connecting member is inserted into a space between the probe and the displacement restriction member.

### [Supplementary Note 10]

The probe unit for spectroscopic analysis according to Supplementary Note 9,
wherein a through-hole is formed in the displacement restriction member,
a screw hole that faces an outer peripheral surface of the probe is formed at a position of the connecting member corresponding to the through-hole, and
a tip of a bolt that is inserted into the through-hole and that is threaded into the screw hole is pressed against the outer peripheral surface of the probe to fix the probe and the connecting member.

### [Supplementary Note 11]

The probe unit for spectroscopic analysis according to any one of Supplementary Notes 1 to 10,
wherein the displacement restriction member restricts a rotation of the probe around a first optical axis of the first optical system.

### [Supplementary Note 12]

The probe unit for spectroscopic analysis according to Supplementary Note 11,
wherein the probe is an inner cylinder,
the displacement restriction member is an outer cylinder,
a flange portion that comes into contact with a bottom surface of an attachment hole formed in the container is formed on an outer peripheral surface of the probe, and
the rotation of the probe is restricted by pressing an end portion of the displacement restriction member against the flange portion.

### [Supplementary Note 13]

The probe unit for spectroscopic analysis according to any one of Supplementary Notes 1 to 12,
wherein the probe has a facing wall surface facing an emission surface of the measurement light of the first optical system, and
a metal is disposed on at least a part of a surface of the facing wall surface.

### [Supplementary Note 14]

The probe unit for spectroscopic analysis according to Supplementary Note 13,
wherein an area of the metal on the facing wall surface is larger than an irradiation area of the measurement light on the facing wall surface.

### [Supplementary Note 15]

The probe unit for spectroscopic analysis according to any one of Supplementary Notes 1 to 14,
wherein the physical property data is Raman spectral data.

### [Supplementary Note 16]

The probe unit for spectroscopic analysis according to any one of Supplementary Notes 1 to 15,
wherein the fluid is any of a cell culture solution, a culture supernatant, a purified solution, or a culture medium.

### [Supplementary Note 17]

The probe unit for spectroscopic analysis according to any one of Supplementary Notes 1 to 16,
wherein the first optical system includes a lens having a positive refractive power.

### [Supplementary Note 18]

The probe unit for spectroscopic analysis according to Supplementary Note 17,
wherein the first optical system is composed of only the lens.

### [Supplementary Note 19]

The probe unit for spectroscopic analysis according to Supplementary Note 18,
wherein the lens has an emission surface of the measurement light that comes into contact with the fluid, and
an emission surface is planar.

### [Supplementary Note 20]

The probe unit for spectroscopic analysis according to Supplementary Note 17,
wherein the first optical system includes an optical element having an emission surface of the measurement light that comes into contact with the fluid, in addition to the lens, and
an emission surface is planar.

### [Supplementary Note 21]

The probe unit for spectroscopic analysis according to any one of Supplementary Notes 17, 18, and 20,
wherein the lens is any of a hemispherical lens, a ball lens, a cylindrical lens, or an aspherical lens.

The technology of the present disclosure can also be combined with various embodiments and/or various modification examples described above, as appropriate. In addition, it goes without saying that the present disclosure is not limited to each of the embodiments described above, various configurations can be adopted as long as the configuration does not deviate from the gist.

The above-described contents and the above-shown contents are the detailed description of the parts according to the technology of the present disclosure, and are merely an example of the technology of the present disclosure. For example, the above description of the configuration, the function, the operation, and the effect are the description of examples of the configuration, the function, the operation, and the effect of the parts according to the technology of the present disclosure. Accordingly, it goes without saying that unnecessary parts may be deleted, new elements may be added, or replacements may be made with respect to the above-described contents and the above-shown contents within a range that does not deviate from the gist of the technology of the present disclosure. Moreover, in order to avoid complications and facilitate grasping the parts according to the technology of the present disclosure, in the above-described contents and the above-shown contents, the description of technical general knowledge and the like that do not particularly require description for enabling the implementation of the technology of the present disclosure are omitted.

In the present specification, "A and/or B" has the same meaning as "at least one of A or B". That is, "A and/or B" means that it may be only A, only B, or a combination of A and B. In the present specification, also in a case in which three or more matters are expressed in association by "and/or", the same concept as "A and/or B" is applied.

All of the documents, the patent applications, and the technical standards described in the present specification are incorporated herein by reference to the same extent as in a case in which each of the documents, patent applications, and technical standards is specifically and individually described by being incorporated by reference.

## Claims

1. A probe unit for spectroscopic analysis, comprising:
a probe in which a first optical system for irradiating a measurement target substance of physical property data of a spectroscopic analysis apparatus with measurement light and for capturing returning light from the measurement target substance is built, and which is attachable to and detachable from a measurement head of the spectroscopic analysis apparatus in which a second optical system is built; and
a displacement restriction member that restricts a displacement of the probe with respect to a container for a fluid including the measurement target substance in a state where the probe is disposed in the container and an orientation of the probe is aligned with an orientation corresponding to a flow of the fluid.

2. The probe unit for spectroscopic analysis according to claim 1,
wherein the container is a flow cell having a first flow passage through which the fluid flows.

3. The probe unit for spectroscopic analysis according to claim 2,
wherein the probe has a second flow passage through which the fluid flows.

4. The probe unit for spectroscopic analysis according to claim 3,
wherein the orientation of the probe is aligned with an orientation in which a flow direction of the fluid in the second flow passage matches a flow direction of the fluid in the first flow passage.

5. The probe unit for spectroscopic analysis according to claim 3,
wherein the second flow passage has an inlet of the fluid and an outlet of the fluid surrounded by a wall surface.

6. The probe unit for spectroscopic analysis according to claim 1, further comprising:
a connecting member that attachably and detachably connects the measurement head and the probe.

7. The probe unit for spectroscopic analysis according to claim 6,
wherein the probe is fitted to the connecting member to perform axial alignment between a first optical axis of the first optical system and a second optical axis of the second optical system.

8. The probe unit for spectroscopic analysis according to claim 6,
wherein the connecting member is attachable to and detachable from the measurement head.

9. The probe unit for spectroscopic analysis according to claim 6,
wherein the probe is an inner cylinder,
the displacement restriction member is an outer cylinder, and
the connecting member is inserted into a space between the probe and the displacement restriction member.

10. The probe unit for spectroscopic analysis according to claim 9,
wherein a through-hole is formed in the displacement restriction member,
a screw hole that faces an outer peripheral surface of the probe is formed at a position of the connecting member corresponding to the through-hole, and
a tip of a bolt that is inserted into the through-hole and that is threaded into the screw hole is pressed against the outer peripheral surface of the probe to fix the probe and the connecting member.

11. The probe unit for spectroscopic analysis according to claim 1,
wherein the displacement restriction member restricts a rotation of the probe around a first optical axis of the first optical system.

12. The probe unit for spectroscopic analysis according to claim 11,
wherein the probe is an inner cylinder,
the displacement restriction member is an outer cylinder,
a flange portion that comes into contact with a bottom surface of an attachment hole formed in the container is formed on an outer peripheral surface of the probe, and
the rotation of the probe is restricted by pressing an end portion of the displacement restriction member against the flange portion.

13. The probe unit for spectroscopic analysis according to claim 1,
wherein the probe has a facing wall surface facing an emission surface of the measurement light of the first optical system, and
a metal is disposed on at least a part of a surface of the facing wall surface.

14. The probe unit for spectroscopic analysis according to claim 13,
wherein an area of the metal on the facing wall surface is larger than an irradiation area of the measurement light on the facing wall surface.

15. The probe unit for spectroscopic analysis according to claim 1,
wherein the physical property data is Raman spectral data.

16. The probe unit for spectroscopic analysis according to claim 1,
wherein the fluid is any of a cell culture solution, a culture supernatant, a purified solution, or a culture medium.

17. The probe unit for spectroscopic analysis according to claim 1,
wherein the first optical system includes a lens having a positive refractive power.

18. The probe unit for spectroscopic analysis according to claim 17,
wherein the first optical system is composed of only the lens.

19. The probe unit for spectroscopic analysis according to claim 18,
wherein the lens has an emission surface of the measurement light that comes into contact with the fluid, and
an emission surface is planar.

20. The probe unit for spectroscopic analysis according to claim 17,
wherein the first optical system includes an optical element having an emission surface of the measurement light that comes into contact with the fluid, in addition to the lens, and
an emission surface is planar.

21. The probe unit for spectroscopic analysis according to claim 17,
wherein the lens is any of a hemispherical lens, a ball lens, a cylindrical lens, or an aspherical lens.
